# EUROPEAN PATENT APPLICATION

(11) **EP 4 216 307 A1**
(43) Date of publication of application: **26.07.2023**
(21) Application number: 21911519.3
(22) Date of filing: 22.12.2021
(51) Int. Cl.: H01M 4/1391, H01M 4/1397, H01M 4/36, H01M 4/62, H01M 4/525, H01M 4/505, H01M 4/04, H01M 10/052

(54) **METHOD FOR MANUFACTURING POSITIVE ELECTRODE FOR LITHIUM SECONDARY BATTERY AND POSITIVE ELECTRODE FOR LITHIUM SECONDARY BATTERY MANUFACTURED THEREBY**

(30) Priority: 22.12.2020 KR 20200180753
(71) Applicant: LG Energy Solution, Ltd., Seoul 07335 (KR)
(72) Inventor: KIM, Tae Gon, Daejeon 34122 (KR); KIM, Jeong Gil, Daejeon 34122 (KR); KIM, Myeong Soo, Daejeon 34122 (KR)
(74) Representative: Hoffmann Eitle
(86) International application number: PCT/KR2021/019600
(87) International publication number: WO 2022/139452

(57) **Abstract**

The present invention relates to a method for manufacturing a positive electrode for a lithium secondary battery and a positive electrode for a lithium secondary battery, manufactured thereby, the method comprising the steps of: i) forming a positive electrode active material by mixing a lithium transition metal oxide and a carbon-based material having a density of 0.05 g/cc or less by a mechano-fusion method; ii) dry-mixing the positive electrode active material and a binder to form a dry mixture; and iii) applying the dry mixture onto a positive electrode current collector.

## Description

### TECHNICAL FIELD

This application claims the benefit of Korean Patent Application No. 10-2020-0180753, filed on December 22, 2020, in the illustrated Intellectual Property Office, the disclosure of which is incorporated herein in its entirety by reference.

The present invention relates to a method for manufacturing a positive electrode for a lithium secondary battery, and a positive electrode for a lithium secondary battery manufactured thereby.

### BACKGROUND ART

As technology development and demand for mobile devices have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material of a lithium secondary battery, a lithium transition metal oxide is used. Among such lithium transition metal oxides, a lithium-cobalt oxide, such as LiCoO₂, which has a high functional voltage and excellent capacity properties has been mainly used. However, LiCoO₂ is very poor in thermal properties due to the destabilization of a crystal structure according to delithiation, and also, is expensive. Therefore, LiCoO₂ has a limitation in being used as a power source in a field such as an electric vehicle or the like in a large amount.

As a material to replace LiCoO₂, a lithium manganese composite metal oxide (LiMnO₂. LiMn₂O₄, and the like), a lithium iron phosphate compound (LiFePO₄ and the like), or a lithium nickel composite metal oxide (LiNiO₂ and the like) and the like has been developed. Among the above materials, research and development has been actively conducted on a lithium nickel composite metal oxide which has a high reversible capacity of about 200 mAh/g, thereby easily implementing a high capacity battery. However, when compared with LiCoO₂, LiNiO₂ has a lower thermal stability, and has a problem in that when an internal short circuit occurs due to external pressure or the like in a charged state, a positive electrode active material itself is decomposed, causing the rupture and ignition of a battery. Therefore, as a method for improving the thermal stability of LiNiO₂, which is low, while maintaining the excellent reversible capacity thereof, a lithium-nickel-cobalt metal oxide in which a part of nickel is substituted with cobalt has been developed.

However, in recent years, studies have been actively conducted on a Co-less positive electrode material not containing cobalt or a Ni-rich positive electrode material containing Ni in excess in consideration of the high cost of cobalt.

Meanwhile, compared to a Co-rich composition which has been typically used and in which cobalt is used in excess, the Co-less positive electrode material or the Ni-rich positive electrode material has a problem of having a low electrical conductivity of positive electrode active material and being vulnerable to moisture. In order to solve the above problem, there has been an attempt to form a carbon coating layer on the surface of the above-described positive electrode material using a pitch and the like.

However, in the case of such a carbon coating layer, there is a disadvantage in that a high-temperature heat treatment for carbonization should be accompanied, and when the high-temperature heat treatment is performed, a carbon element on a surface reacts with oxygen on the surface of a positive electrode material and reduced, which causes the oxidation number of the positive electrode material to greatly change, resulting in deteriorating the performance of the positive electrode material.

Therefore, there has been a demand for developing a positive electrode active material that can improve electrical conductivity and lifespan properties by forming a thin and uniform carbon coating layer on the surface of the positive electrode active material without the change in the oxidation number of the surface of a positive electrode material caused by a high-temperature heat treatment process.

### DISCLOSURE OF THE INVENTION

### TECHNICAL PROBLEM

An aspect of the present invention provides a method for manufacturing a positive electrode for a lithium secondary battery in which a positive electrode active material including a uniform carbon coating layer is prepared and used in a dry electrode process, and a positive electrode for a lithium secondary battery manufactured using the method.

### TECHNICAL SOLUTION

According to an aspect of the present invention, a method for manufacturing a positive electrode for a lithium secondary battery, comprising
i) mixing a lithium transition metal oxide and a carbon-based material having a density of 0.05 g/cc or less in a mechanofusion manner to form a positive electrode active material including a carbon coating layer,
ii) dry mixing the positive electrode active material and a binder to form a dry mixture, and
iii) applying the dry mixture on a positive electrode current collector.
   is provided.

According to another aspect of the present invention, there is provided
a positive electrode for a lithium secondary battery, the positive electrode comprising a positive electrode current collector and a positive electrode active material layer formed on the positive electrode current collector, wherein
the positive electrode active material layer includes a lithium transition metal oxide and a carbon coating layer formed on the lithium transition metal oxide, and
the carbon coating layer is formed by mixing a carbon-based material having a density of 0.05 g/cc or less with the lithium transition metal oxide in a mechanofusion manner.

According to another aspect of the present invention, there is provided a lithium secondary battery including the positive electrode for a lithium secondary battery.

### ADVANTAGEOUS EFFECTS

According to the present invention, a carbon coating layer in a thin and uniform form may be formed on the surface of a lithium transition metal oxide without changing an oxidation number, and the carbon coating layer is used as a positive electrode active material, so that it is possible to manufacture a positive electrode in a dry manner either without using a conductive material or using only a small amount thereof without a solvent.

### BRIEF DESCRIPTION OF THE DRAWINGS

FIG. 1 shows TEM photographs of carbon black (left) of a hollow structure and carbon black (right) of a dense structure, which are carbon-based materials.
FIG. 2 shows TEM photographs taken of structures of carbon black used in Examples and Comparative Examples of the present invention.
FIG. 3 shows SEM photographs taken of surfaces of positive electrode active materials of Comparative Examples 2 and 3, and Example 3 of the present invention.

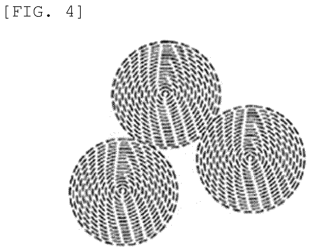

FIG. 4 is a schematic view of a porous hollow carbon-based material.

### BEST MODE FOR CARRYING OUT THE INVENTION

Hereinafter, the present invention will be described in more detail.

In the present specification, a "specific surface area" is measured by a BET method, and specifically, may be calculated from the adsorption amount of nitrogen gas under a liquid nitrogen temperature (77K) using Belsorp-mino II of BEL Japan Co., Ltd.

In the present specification, "dibutyl pthalate (DBP) absorption" is the measurement of a DBP absorption amount for the surface of a chain-type secondary structural body in which a primary structural body of a carbon-based material is aggregated, and indicates the primary structural body in the carbon-based material has how well connected the secondary structural body. The DBP absorption may be measured by mixing DBP, which is a plasticizer, with a predetermined amount of carbon-based material to measure changes in torques occurring due to the impregnation of the plasticizer. Typically, the higher the DBP absorption, the better the secondary structure is developed, which means that electrical conductivity is good.

In the present specification, "graphitization" means a degree to which amorphous carbon changes partially or entirely into a highly crystalline graphitized structure, and may be confirmed using Raman spectroscopy. The structure of a carbon-based material may be analyzed thereby. In the Raman spectrum of a carbon-based material, a G-band is a peak indicating a sp² bond of the carbon-based material, and it indicates a carbon crystal with no structural defects, and a D-band is a peak indicating a sp³ bond of the carbon-based material, and it increases when an atomic bond formed by the sp² bond is broken and becomes the sp³ bond. The above D band increases when disorders or defects present in the carbon-based material are generated, so that it is possible to quantitatively evaluate the degree of disorder or defect generation by calculating the ratio (I_{D/}I_{G}) of the maximum peak intensity (I_{D}) of the D band to the maximum peak intensity (I_{G}) of the G band.

In the carbon-based material of the present invention, an aggregate in which primary particles are connected in a chain form is defined as a secondary particle or secondary structure. Specifically, a carbon tissue having a sp² atomic arrangement is disposed on a spherical primary particle, and these primary particles form a chain-type secondary particle or secondary structure, which is an aggregate, by partially interconnecting carbon structures of the primary particles at a contact point and sharing a carbon unit tissue in the form of a graphitic layer.

In the present invention, a "primary particle" of a lithium transition metal oxide particle means the smallest particle unit distinguished as one mass when a cross-section of a lithium transition metal oxide is observed through a scanning electron microscope (SEM), and may be formed of one crystal grain, or formed of a plurality of crystal grains. In the present invention, the average particle diameter of the primary particles may be measured by measuring the size of each particle distinguished in a cross-sectional SEM image of lithium transition metal oxide particles and obtaining an arithmetic mean value thereof.

In the present invention, a "secondary particle" means a secondary structural body formed by the aggregation of a plurality of primary particles. The average particle diameter of the secondary particles may be measured using a particle size analyzer, and in the present invention, Microtrac's S-3500 was used as a particle size analyzer.

In the present invention, the density of the carbon-based material is a bulk density value obtained by the standard measurement method of JIS K 1649.

A method for manufacturing a positive electrode for a secondary battery according to the present invention includes steps i) to iii) to be described later, and hereinafter, each step will be described in detail.

### Method for manufacturing positive electrode

### i)Step of Forming positive electrode active material

In the forming of a positive electrode active material of the present invention, a lithium transition metal oxide and a carbon-based material having a density of 0.05 g/cc or less are mixed in a mechanofusion manner. Typically, a carbon-based material is introduced on the surface of a positive electrode active material mainly through high-temperature heat treatment, but in this case, carbon atoms react with oxygen on the surface of a lithium transition metal oxide, and is reduced, and the oxidation number of the lithium transition metal oxide is significantly changed, so that there is a problem in that the performance of the positive electrode active material is degraded.

Therefore, the present inventors not only have solved the above problem by introducing a mechanofusion method, which is a physical treatment method using the Nobilta device, but also have found that the mechanofusion method is more effective in forming a thin uniform carbon coating layer compared to a simple mechanical mixing using a paint shaker or the like.

In addition, various physical properties conditions of a carbon-based material suitable for the mechanofusion method have been confirmed, through which the electrochemical properties of a lithium secondary battery has been improved.

Furthermore, the present inventors have utilized the positive electrode active material of the present invention in the manufacturing of a dry electrode which has recently been attracting attention in the electric vehicle market. Specifically, the present inventors have found that when the positive electrode active material in which a carbon coating layer is uniformly formed is applied, the problem of poor dispersion of a conductive material and a binder for a dry electrode using the fiberization of a polytetrafluoroethylene (PTFE) binder may be solved, and a dry electrode may be effectively implemented.

That is, when the positive electrode active material in which a carbon coating layer is formed is applied, a conductive material in a powder form, which is difficult to uniformly disperse by a dry mixing process, is not additionally used, or only a small amount thereof is used, so that it is possible to solve the poor dispersibility of the conductive material powder. Particularly, since it is possible to solve the conductive material interference problem for the fiberization of the polytetrafluoroethylene binder, a positive electrode may be manufactured only by a dry process without a wet process which applies a toxic organic solvent, so that it is environmentally friendly, and since an organic solvent drying process is omitted, it is possible to significantly reduce electrode manufacturing process costs.

The lithium transition metal oxide may have crystal grains of 50 nm to 4,000 nm, preferably 50 nm to 2,000 nm. For example, the lithium transition metal oxide may be in the form of a secondary particle formed by the aggregation of primary particles, or the lithium transition metal oxide may be in the form of a single particle.

In an embodiment of the present invention, when the lithium transition metal oxide is formed as a secondary particle in which primary particles are aggregated, the energy density per volume of an electrode may be increased, the contact area between the lithium transition metal oxide and an electrolyte solution is large, and the travel distance of lithium ions in the lithium transition metal oxide is short, so that high capacity and high power properties may be easily achieved. In addition, a uniform coating layer may be formed even in a concave-convex portion, which is the boundary surface between the primary particles of the lithium transition metal oxide, and the conductive network of the carbon coating layer may be more firmly maintained. As a result, the conductivity of the positive electrode active material may be greatly improved, and the BET specific surface area of a positive electrode active material finally manufactured may also be maintained low, and side reactions and the like with an electrolyte solution due to an increase in the BET specific surface area may be prevented in advance.

In an embodiment of the present invention, when the lithium transition metal oxide is formed in the form of a single particle composed only of primary particles, the surface thereof is smoother than that of a secondary particle, thereby facilitating carbon coating, and since roll-pressing density is improved, the structural stability of an electrode may be improved. However, compared to a positive electrode active material of a secondary particle phase, the single particle form composed only of primary particles has a reduced contact area with an electrolyte solution, so that the output properties of a battery may be slightly poor.

The lithium transition metal oxide may use any positive electrode active material without limitation as long as it is typically used as a positive electrode active material and capable of facilitating intercalation and de-intercalation of lithium ions during charging and discharging, but may be, for example, one or more selected from a lithium-nickel-cobalt-based composite oxide, a lithium-manganese-based complex oxide, and a lithium iron phosphate-based complex oxide, and may be, preferably, a lithium-nickel-cobalt-based composite oxide represented by Formula 1 below.

[Formula 1] Li₁₊ₓ(NiₐCo_{b}Mn_{c}M_{d})O₂

In Formula 1 above,
M is one or more selected from the group consisting of W, Cu, Fe, V, Cr, Ti, Zr, Zn, Al, In, Ta, Y, La, Sr, Ga, Sc, Gd, Sm, Ca, Ce, Nb, Ru, Mg, P, B, Si, Na, K, and Mo, and
0≤x≤0.2, 0.50≤a≤0.95, 0≤b≤0.5, 0≤c≤0.5, 0≤d≤0.5, and a+b+c+d=1.

In an embodiment of the present invention, the above a, b, c, and d may respectively satisfy 0.60≤a≤0.80, 0.10≤b≤0.20, 0.10≤c≤0.20, and 0≤d≤0.05.

The lithium-manganese-based complex oxide may be LiMnO₂, LiMnO₃, LiMn₂O₃, Li₂MnO₃, Li_{1+y1}Mn_{2-y1}O₄(0≤y1≤0.33), LiMn_{2-y2}M_{y3}O₄ (wherein M is one or more selected from Ni, Co, Fe, P, S, Zr, Ti, and Al, and 0≤y2≤2), LiMn_{2-y3}M_{y3}O₂ (wherein M is one or more selected from Co, Ni, Fe, Cr, Zn, and Ta, and 0.01≤y3≤0.1), orLi₂Mn₃MO₃ (wherein M is one or more selected from Fe, Co, Ni, Cu, and Zn) .

The lithium iron phosphate-based complex oxide may be represented by Formula 2 below.

[Formula 2] LiFe₁₋ₓMₓPO₄

In Formula 2 above,
M is one or more selected from Ni, Co, Mn, Al, Mg, Y, Zn, In, Ru, Sn, Sb, Ti, Te, Nb, Mo, Cr, Zr, W, Ir, and V, and
0≤x<1.

The density of the carbon-based material may be 0.05 g/cc or less, specifically 0.01 g/cc to 0.05 g/cc, more specifically 0.02 g/cc to 0.04 g/cc.

The BET specific surface area of the carbon-based material may be 300 m²/g or greater, specifically 500 m²/g to 3,000 m²/g, more specifically 700 m²/g to 2,500 m²/g.

In an embodiment of the present invention, the carbon-based material may have a porous hollow structure.

Such a hollow structure has relatively low crystallinity, so that a hollow carbon tissue structure may easily collapse by mechanical physical surface treatment, in which case, the carbon-based material may be coated thin and uniform on the surface of a lithium transition metal oxide compared to other carbon-based materials having a dense structure.

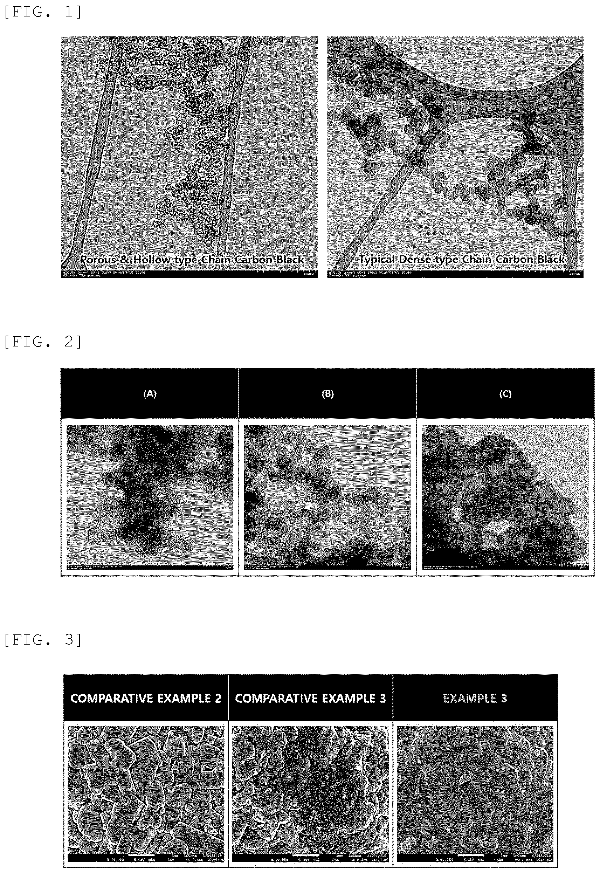

FIG. 1 shows the comparison of TEM photographs of carbon black (left) of a hollow structure and carbon black (right) of a dense structure.

The porous hollow carbon-based material according to the present invention has a chain shape, and may be in the form of a secondary particle in which primary particles are aggregated. Due to the above form, the porous hollow carbon-based material includes pores thereinside and exhibits low crystallinity, and when a carbon coating layer is formed using the porous hollow carbon-based material, the carbon-based material is crushed and brought into close contact with the surface of the lithium transition metal oxide due to the structural collapse of the carbon-based material by force applied from the outside, so that the carbon coating layer may be formed to a uniform thickness on the surface of a secondary particle of the lithium transition metal oxide.

The carbon-based material may be one or more selected from carbon black, carbon fiber, carbon nanotube, graphite, and graphene, and preferably carbon black.

The carbon-based material may have a primary particle diameter of 10 nm to 100 nm, preferably 30 nm to 60 nm. The diameter is obtained by measuring diameters of primary particles by TEM equipment and calculating an arithmetic mean value of the diameters. When the primary particle size of the carbon-based material satisfies the above range, it is advantageous in forming a uniform carbon coating layer.

The hollow carbon of the present invention includes a shell on the surface of a primary particle, and when the shell has a thickness of 10 nm or less from the surface of the primary particle, the carbon tissue may have flexibility like a few-layered graphene. As can be seen in FIG. 2 (C), as the primary particle diameter increases, the thickness of the shell also tends to increase.

In the present invention, when the primary particle diameter of the carbon-based material is greater than 100 nm, in controlling the thickness of the shell for a porous hollow carbon-based material, it is not easy to manufacture a carbon coating layer thinly and uniformly to a target thickness of 10 nm or less, and accordingly, the flexibility of the carbon tissue is decreased, so that the surface binding force is not good even when the mechanical surface coating treatment is performed, and the structure of the carbon tissue does not easily collapse, so that it is difficult to achieve desired thin and uniform carbon-based surface coating. In addition, when the primary particle size of the carbon-based material is less than 10 nm, the specific surface area rapidly increases, so that powder dispersion due to intermolecular attraction becomes extremely difficult, and partially aggregated carbon tissues are coated in an overlapped state on the spot, so that there may be a problem in which an overall uniform coating layer may not be formed.

The dibutyl pthalate (DBP) absorption of the carbon-based material may be 200 mL/100 g or greater, specifically 200 mL/100 g to 800 mL/100 g, more specifically 400 mL/100 g to 600 mL/100 g.

In the present specification, the dibutyl pthalate (DBP) absorption is the measurement of a DBP absorption amount for the surface of a chain-type secondary structural body in which a primary structural body of a carbon-based material is aggregated, and indicates the primary structural body in the carbon-based material has how well connected the secondary structural body. Typically, the higher the DBP absorption, the better the secondary structure is developed, which means that electrical conductivity is good.

For example, when the DBP absorption is less than 200 mL/100 g, a chain-type secondary structure for a carbon-based material is not developed, so that it may be difficult to exhibit improved conductivity.

In an embodiment of the present invention, the graphitization (I_{D}/I_{G}) of the carbon-based material may be 1.0 or greater, specifically 1.0 to 2.0. A carbon-based material having a graphitization of less than 1.0 generally has high crystallinity, and as a result, the structural collapse of a carbon tissue does not easily occur, so that even if force is applied from the outside, the carbon tissue of high crystallinity is maintained without the structural collapse of the carbon-based material on the surface of a lithium transition metal oxide, and thus, smooth coating on the surface is not achieved, and overall rough surface properties are achieved, resulting in increasing the BET specific surface area of a positive electrode active material. In addition, since a carbon-based coating layer is formed in a simple adsorption form on the surface of the lithium transition metal oxide without the collapse of the tissue structure of a carbon-based material, it is not easy to form a solid and uniform carbon coating layer on the surface of the positive electrode active material, and there is a critical problem in that the carbon coating layer may be easily detached from the surface. Particularly, when the lithium transition metal oxide has a secondary particle form in which primary particles are aggregated, it is difficult to form a carbon coating layer in a concave-convex portion at a boundary surface between the primary particles of the lithium transition metal oxide, so that it is even more difficult to form a uniform carbon coating layer.

Based on the total weight of the positive electrode active material, the amount of the carbon-based material is in a range of 0.1 wt% to 10.0 wt%, preferably 0.1 wt% to 5.0 wt%, more preferably 0.1 wt% to 3.0 wt%.

When the amount of the carbon-based material is in the above range, it is possible to prevent the problem in which an excessively thick carbon coating layer is formed, while forming a uniform carbon coating layer on the entire surface of the lithium transition metal oxide. When an excessively thick carbon coating layer is formed, the carbon coating layer may act as resistance which inhibits the diffusion of lithium ions, and when applied to a battery, the input/output properties of the battery may be degraded.

A carbon coating layer is formed on the lithium transition metal oxide through Step i) above.

Specifically, mixing in the mechanofusion manner is performed using a nobilta device under a dry process condition in which an additive such as a solvent or a binder is not additionally included. Specifically, the mixing may be performed while stirring a reactor with a current of 3 to 15 A, a power of 0.2 W to 5.5 W, and a rotational speed of 300 rpm to 6,000 rpm based on a nobilta device of 0.5 L capacity. The mechanofusion method may have different current, power, rotational speed conditions depending on the capacity of a device. For example, if the capacity of a device is increased, power may be increased but a rotational speed may be decreased. As a specific example, when a nobilta device of 300 L capacity is used, the mechanofusion method may be performed while stirring at a rotational speed of 50 rpm to 800 rpm at a power of 10 W to 200 W. By introducing the mechanofusion method, the dispersibility of particles is improved, so that carbon materials may be spaced at uniform intervals on the surface of the lithium transition metal oxide, and due to high sheer force, a uniform carbon coating layer may be formed on the surface of the lithium transition metal oxide. In addition, even when the lithium transition metal oxide has a secondary particle form in which primary particles are aggregated, a carbon coating layer may be formed not only on the surface of the secondary particle of the lithium transition metal oxide, but also at the boundary between the primary particles.

According to an aspect of the present invention, the thickness of the carbon coating layer may be 1 nm to 500 nm, preferably 1 nm to 300 nm, more preferably 1 nm to 100 nm.

### ii) Step of Forming dry mixture

Step ii) is performed by dry mixing the positive electrode active material formed through Step i) described above and a binder, and specifically, the binder may include polytetrafluoroethylene (PTFE).

Specifically, the dry mixing refers to a mixing method not using a solvent, and may be performed by repeating the process condition of mixing for 1 minute at 10,000 rpm 3 times using a laboratory blender device of Warning Co., Ltd. In general, a slurry form including a solvent is used when manufacturing an electrode, so that an electrode drying process is required, and also, in the case of a positive electrode in particular, there is a concern about a safety problem due to the toxicity of an organic solvent.

In the present invention, a solvent is not used in the process of mixing a positive electrode active material and a binder, so that there is an effect of simplifying a process, reducing costs, and improving safety. Also, in the case of a positive electrode manufactured through a dry process, the porosity may be lowered compared to a positive electrode manufactured through a dry process after a wet process using a solvent, so that an effect of improving energy density may also be expected.

In an embodiment of the present invention, the binder may further include polyvinylidene fluoride or an acrylic polymer.

Since the positive active material of the present invention already has a carbon coating layer uniformly formed on the surface thereof, the dry mixture may not include a conductive material, or in some cases, may include a small amount of an additional conductive material to improve the formation of a conductive network between active materials.

Based on the total weight of the dry mixture, the amount of the positive electrode active material may be in range of 60 wt% to 99.9 wt%, preferably 80 wt% to 99 wt%, and when the amount of the positive electrode active material is in the above range, there is an effect of increasing energy density per volume.

Based on the total weight of the dry mixture, the amount of the binder may be in range of 0.1 wt% to 20 wt%, preferably 1 wt% to 10 wt%, and when the amount of the binder is in the above range, there is an effect of increasing energy density per volume, lowering the resistance of an electrode, and maintaining the adhesion force of the electrode.

Based on the total weight of the dry mixture, the amount of the conductive material may be in range of 20 wt% or less, specifically 0.05 wt% to 10 wt%, more preferably 0.05 wt% to 5 wt%, and since a smaller amount of conductive material powder is used than the amount thereof used in forming a typical positive electrode, there is an effect of improving dispersibility.

In an embodiment of the present invention, the positive electrode active material has a powder electrical conductivity of 5.0 × 10⁻³ S/cm to 10.0 × 10⁻³ S/cm, preferably 5.5 × 10⁻³ S/cm to 8.5 × 10⁻³ S/cm, which is measured after being roll-pressed with a pressure of 10 MPa to 100 MPa.

### iii) Step of Applying dry mixture on positive electrode current collector

The applying of Step iii)of the present invention may be performed by a scattering method, through which the dry mixture may be disposed on a current collector to a uniform thickness.

The scattering method is performed through a process in which the dry mixture is moved on a feeding roller, and the dry mixture is applied while the thickness of a dry mixture layer is maintained using a squeeze roll when the dry mixture is applied on a current collector.

Since the dry mixture is disposed in a powder form on the current collector, the contact between the current collector and the dry mixture may increase compared to a case in which the dry mixture is disposed in a film form, and accordingly, the positive electrode adhesion force may be further improved. In addition, the dry mixture may be prepared in a free standing film form while passing vertically between two rolls disposed horizontally, in which case, an electrode may be manufactured by laminating a manufactured film and a current collector through hot roll-pressing. The current collector may be a porous foil (perforated foil) having a surface concavo-convex portion in order to enhance adhesion force with an active material layer, may be a foil coated with an adhesive layer on the surface such as a polyvinylidene fluoride or acrylic binder, or may be a foil having an adhesive layer including a carbon-based conductive in order to reduce resistance due to the introduction of the adhesive layer.

The dry mixture disposed on the current collector may be formed as a positive electrode active material layer having a desired target thickness through an additional roll-pressing process. Specifically, the positive electrode active material layer may be formed through roll-pressing the current collector on which the dry mixture is disposed, and the roll-pressing may be applying spinning to the dry mixture. In the case of applying spinning, large shear force is applied even with a small force compared to a case in which surface pressure is applied, and at the same time, it is possible to perform a roll-pressing process, so that electrode manufacturing processability may be greatly improved.

The roll-pressing step may include a process of roll-pressing the current collector on which the dry mixture is disposed through a roll. The roll-pressing method includes, in the state in which two rolls are disposed in an upper portion and a lower portion of the current collector on which the dry mixture is disposed, applying pressure to the rolls, and at the same time, moving the current collector on which the dry mixture is disposed in a tangential direction and a horizontal direction of the two rolls.

### Positive electrode

A positive electrode for a lithium secondary battery according to the present invention is manufactured by the method for manufacturing a positive electrode for a lithium secondary battery described above. That is, the positive electrode includes a positive electrode current collector, and a positive electrode active material layer formed on the positive electrode current collector, and the positive electrode active material layer includes a lithium transition metal oxide and a carbon coating layer formed on the lithium transition metal oxide, wherein the carbon coating layer is formed by mixing a carbon-based material having a density of 0.05 g/cc or less with the lithium transition metal oxide in a mechanofusion manner.

Specifically, the positive electrode active material layer includes a positive electrode active material, and the positive electrode active material includes a lithium transition metal oxide and a carbon coating layer formed on the lithium transition metal oxide, wherein the carbon coating layer is formed by mixing a carbon-based material having a density of 0.05 g/cc or less with the lithium transition metal oxide in a mechanofusion manner.

Descriptions of components constituting the positive electrode may refer to the description of the method for manufacturing a positive electrode for a lithium secondary battery described above.

### Lithium secondary battery

A lithium secondary battery of the present invention includes the above-described positive electrode.

Specifically, the lithium secondary battery may be manufactured by a method typically used in the art except that a positive electrode is manufactured according to the present invention, and includes a positive electrode manufactured according to the present invention, a negative electrode positioned facing the positive electrode, a separator interposed between the positive electrode and the negative electrode, and an electrolyte.

Hereinafter, only the components other than the positive electrode will be described in detail.

Also, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode active material, and may be manufactured by coating a negative electrode slurry including the negative electrode active material, a binder, a conductive material, a solvent, and the like on a negative electrode current collector, followed by drying and roll-pressing.

The negative electrode current collector typically has a thickness of 3 um to 500 um. The negative electrode current collector is not particularly limited as long as it has high conductivity without causing a chemical change in the battery. For example, copper; stainless steel; aluminum; nickel; titanium; fired carbon, copper or stainless steel that is surface-treated with one of carbon, nickel, titanium, silver, and the like, or an aluminum-cadmium alloy and the like may be used. Also, as in the case of the positive electrode current collector, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

In addition, the negative electrode active material may include one or more selected from a carbon material capable of reversible intercalation/de-intercalation of lithium ions; a metal or an alloy of the metal and lithium; a metal complex oxide; a material capable of doping and undoping lithium; a lithium metal; and a transition metal oxide.

As the carbon material capable of reversible intercalation/de-intercalation of lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon), hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z} (Me: Mn, Fe, Pb, Ge; Me' :Al, B, P, Si, an element each in Group 1, Group 2, and Group 3 of the periodic table, halogen; 0<x≤1; 1≤y≤3; 1≤z≤8) may be used.

The material capable of doping or undoping lithium may be Si, SiO_{X}(0<x≤2), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO₂ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide include a lithium-containing titanium composite oxide (LTO), a vanadium oxide, a lithium vanadium oxide, and the like.

The negative electrode active material may be included in an amount of 80 wt% to 99 wt% based on the total weight of solids in a negative electrode slurry.

The binder is a component for assisting in bonding among a conductive material, an active material, and a current collector, and may be typically added in an amount of 1 wt% to 30 wt% based on the total weight of solids in a negative electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene-monomer, styrene-butadiene rubber, fluorine rubber, or a combination thereof.

The conductive material is a component for further improving the conductivity of a negative electrode active material, and may be added in an amount of 1 wt% to 20 wt% based on the total weight of solids in a negative electrode slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, single-walled or multi-walled carbon nanotube or graphene, or graphite, which has a very developed crystal structure; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative, and the like.

A solvent of the negative electrode slurry may include water, or an organic solvent such as NMP, an alcohol, or the like, and may be used in an amount such that a preferred viscosity is achieved when the negative electrode active material, the binder, the conductive material, and the like are included. For example, the solvent may be included in an amount such that the concentration of solids in a slurry including a negative electrode active material, a binder and a conductive material is 30 wt% to 99 wt%, preferably 40 wt% to 99 wt%.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable.

Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a low-viscosity linear carbonate-based compound (e.g., ethylmethyl carbonate, dimethyl carbonate, or diethyl carbonate) is more preferable. In this case, it is preferable that the cyclic carbonate and the chain carbonate are mixed in a volume ratio of about 1:1 to about 1:9.

As the lithium salt, any lithium salt typically used in an electrolyte for a lithium secondary battery may be used without imitation, and for example, the lithium salt may include Li⁺ as a positive ion, and include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF⁻, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

Specifically, the lithium salt may include any one or a mixture of two or more selected from the group consisting of LiN(FSO₂)₂(lithium bis(fluorosulfonyl)imide) (LiFSI), LiPF₆, LiClO₄, LiBF₄, LiTFSI, lithium bis(pentafluoroethanesulfonyl)imide (LiBETI), LiSO₃CF₃, LiPO₂F₂, lithium bis(oxalate)borate (LiBOB), lithium difluoro(oxalate)borate (LiFOB), lithium difluoro(bisoxalato) phosphate (LiDFBP), lithium tetrafluoro(oxalate) phosphate (LiTFOP), and lithium fluoromalonato(difluoro) borate (LiFMDFB) .

In addition to the electrolyte components, the electrolyte may selectively include additives, if necessary, in order to prevent an electrolyte from decomposing in a high-voltage environment, thereby causing electrode collapse, or to further improve low-temperature high-rate discharge properties, high-temperature stability, overcharge prevention, the effect of suppressing battery expansion at high temperatures, and the like.

The additive may be one or more selected from a cyclic carbonate-based compound, a halogen-substituted carbonate-based compound, a sultone-based compound, a sulfate-based compound, a phosphorus-based compound, a nitrile-based compound, an amine-based compound, a silane-based compound, a benzene-based compound, and a lithium salt-based compound.

The cyclic carbonate-based compound may be one or more selected from vinylene carbonate (VC) and vinylethylene carbonate, and specifically, may be vinylene carbonate.

The halogen-substituted carbonate-based compound may be fluoroethylene carbonate (FEC).

The sultone-based compound is a material capable of forming a stable SEI film by a reduction reaction on the surface of a negative electrode, and may be one or more compounds selected from 1,3-propane sultone (PS), 1,4-butane sultone, ethene sultone, 1,3-propene sultone (PRS), 1,4-butene sultone, and 1-methyl-1,3-propene sultone, and specifically, may be 1,3-propane sultone (PS).

The sulfate-based compound is a material which may be electrically decomposed on the surface of a negative electrode, thereby forming a stable SEI thin film which is not cracked even during high-temperature storage, and may be one or more selected from ethylene sulfate (ESA), trimethylene sulfate (TMS), or methyl trimethylene sulfate (MTMS).

The phosphorus-based compound may be one or more selected from lithium difluoro(bisoxalato)phosphate, lithium difluorophosphate, tris(trimethyl silyl)phosphate, tris(trimethyl silyl)phosphite, tris(2,2,2-trifluoroethyl)phosphate, and tris(trifluoroethyl)phosphite.

The nitrile-based compound may be one or more selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and specifically, may be one or more selected from 2-fluorobenzonitrile, 4-fluorobenzonitrile, difluorobenzonitrile, and trifluorobenzonitrile containing fluorine.

The amine-based compound may be one or more selected from triethanolamine and ethylenediamine, and the silane-based compound may be tetravinylsilane.

The benzene-based compound may be one or more selected from monofluorobenzene, difluorobenzene, trifluorobenzene, and tetrafluorobenzene.

The lithium salt-based compound is a compound different from a lithium salt included in the non-aqueous electrolyte solution, and may be one or more compounds selected from LiPO₂F₂, lithium difluoro(oxalato)borate (LiODFB), lithium bisoxalatoborate (LiB(C₂O₄)₂) (LiBOB), lithium tetraphenylborate, and lithium tetrafluoroborate (LiBF₄).

The amount of the additive may be in range of 0.01 wt% to 5 wt% based on the total weight of the electrolyte.

The lithium secondary battery including a positive electrode manufactured through the method for manufacturing a positive electrode according to the present invention stably exhibits excellent discharge capacity, output properties, and lifespan properties, and thus, are useful for portable devices such as a mobile phone, a laptop computer, and a digital camera, and in the field of electric vehicles such as an electric vehicle (EV), a hybrid electric vehicle (HEV), and a plug-in hybrid electric vehicle (PHEV).

Accordingly, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, a vehicle including an electric vehicle, a hybrid electric vehicle, and a plug-in hybrid electric vehicle, or a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

Hereinafter, the present invention will be described in detail with reference to embodiments.

### MODE FOR CARRYING OUT THE INVENTION

### [Examples: Preparation of positive electrode active material]

In the following Examples and Comparative Examples, carbon black having a porous hollow structure having the characteristics shown in Table 1 below was used as a carbon-based material.

**[Table 1]**

| | Density (g/cc) | Specific surface area (m²/g) | Graphitiza tion (I_{D/}I_{G}) | DBP absorption rate (mL/100 g) | Primary particle size (nm) | TEM photograph |
|---|---|---|---|---|---|---|
| Example 1 | 0.02 | 2,120 | 1.27 | 690 | 10 | (A) of FIG. 2 |
| Example 2 | 0.03 | 1,410 | 1.18 | 485 | 30 to 50 | (B) of FIG. 2 |
| Example 3 | 0.04 | 790 | 1.09 | 215 | 100 | (C) of FIG. 2 |
| Example 4 | 0.03 | 1,410 | 1.18 | 485 | 30 to 50 | (B) of FIG. 2 |
| Comparative Example 1 | 0.03 | 1,410 | 1.18 | 485 | 30 to 50 | (B) of FIG. 2 |
| Comparative Example 2 | - | - | - | - | - | - |
| Comparative Example 3 | 0.09 | 65 | 0.92 | 190 | 30 to 50 | Right side of FIG. 1 |

### Example 1

300 g of a mixture including 99 wt% of a lithium transition metal oxide represented by LiNi_{0.6}Co_{0.2}Mn_{0.2}O₂ and 1 wt% of carbon black of Table 1 above was introduced to a mechanofusion device (Nobilta NOB-130, Hosokawa Micron Co., Ltd.) and processed at 3,000 rpm for 10 minutes to prepare a positive electrode active material in which a carbon coating layer having a thickness of 10 nm to 100 nm was formed on the lithium transition metal oxide.

### Example 2

A positive electrode active material in which a carbon coating layer having a thickness of 10 nm to 100 nm was formed on the lithium transition metal oxide was prepared in the same manner as in Example 1 except that carbon black of Table 1 was used.

### Example 3

A positive electrode active material in which a carbon coating layer having a thickness of 10 nm to 100 nm was formed on the lithium transition metal oxide was prepared in the same manner as in Example 1 except that carbon black of Table 1 was used.

### Example 4

200 g of a mixture including 99 wt% of a lithium transition metal oxide represented by LiNi_{0.6}Co_{0.2}Mn_{0.2}O₂ and 1 wt% of carbon black of Table 1 above was introduced to a mechanofusion device (Nobilta NOB-130, Hosokawa Micron Co., Ltd.) and processed at 3,000 rpm for 10 minutes to prepare a positive electrode active material in which a carbon coating layer having a thickness of 10 nm to 100 nm was formed on the lithium transition metal oxide.

### Comparative Example 1

300 g of a mixture including 99 wt% of a lithium transition metal oxide represented by LiNi_{0.6}Co_{0.2}Mn_{0.2}O₂ and 1 wt% of carbon black of Table 1 above was introduced to a paint shaker (1400 Al classic shaker, Red Devil Co., Ltd.) and mixed for 60 minutes to prepare a positive electrode active material in which a carbon coating layer having a thickness of 10 nm to 100 nm was formed on the lithium transition metal oxide.

### Comparative Example 2

A lithium transition metal oxide represented by LiNi_{0.6}Co_{0.2}Mn_{0.2}O₂ and not having a carbon coating layer was used as a positive electrode active material.

### Comparative Example 3

A positive electrode active material in which a carbon coating layer having a thickness of 10 nm to 100 nm was formed on the lithium transition metal oxide was prepared in the same manner as in Example 2 except that carbon black of Table 1 was used.

### Experimental Example 1.

### (1) Identification of surface properties of positive electrode active material

FIG. 3 shows SEM photographs taken of surfaces of the positive electrode active materials of Comparative Examples 2 and 3, and Example 3.

First, when the surface of Example 3 is compared with the surface of Comparative Example 2 in which a carbon coating layer is not formed, it can be confirmed that a film of a gray shade is formed on the surface of a particle, through which it can be seen that a carbon-based coating layer is uniformly coated on the surface of the lithium transition metal oxide.

In addition, in the case (Comparative Example 3) in which dense carbon black whose density and BET specific surface area of carbon black are out of the range of the present invention, it can be confirmed that even when a carbon coating layer is formed in a mechanofusion manner, carbon particles are not uniformly coated on the surface of a particle, but are simply attached only in an aggregated form in a concave-convex portion at the boundary surface between the primary particles and on the surface.

### (2) Powder electrical conductivity of positive electrode active material (S/cm)

5 g of the positive electrode active material prepared in each of Examples 1 to 4 and Comparative Examples 1 to 3 were put into a holder, and then was roll-pressed by a pressure of 62 MPa applied thereto, and using a powder-only 4-probe powder electrical conductivity measuring electrode (Mitsubishi Chemical, powder resistance system (MCP-PD51)), the powder electrical conductivity was measured. The measurement results are shown in Table 2 below.

**[Table 2]**

| | Electrical conductivity (S/cm) |
|---|---|
| Example 1 | 6.97 × 10⁻³ |
| Example 2 | 8.22 × 10⁻³ |
| Example 3 | 5.85 × 10⁻³ |
| Example 4 | 7.71 × 10⁻³ |
| Comparative Example 1 | 3.63 × 10⁻³ |
| Comparative Example 2 | 2.18 × 10⁻³ |
| Comparative Example 3 | 2.31 × 10⁻³ |

Referring to Table 2 above, it can be confirmed that the positive electrode active materials of Examples 1 to 4 prepared according to the present invention have improved positive electrode active material powder electrical conductivity compared to those of Comparative Examples 1 to 3.

### Experimental Example 2. Manufacturing of positive electrode and battery

Pre-mixing was performed by repeating the process condition of mixing 97 wt% of the positive electrode active material prepared in each of Examples 1 to 4 and Comparative Examples 1 to 3, 1 wt% of a conductive material (Imerys Co., Ltd, Super C65), and 2 wt% of a PTFE binder (Dupont Co., Ltd, TEFLON PTFE 60 TYPE) for 1 minute at 10,000 rpm five times using a laboratory blender device of Warning Co., Ltd. Thereafter, the dry mixture was treated with a self-manufactured special mixing mixer capable of applying high shear force to prepare a dry mixed dough through a PTFE fiberization process, and then a free-standing thin film was manufactured by a roll-pressing process through the Two Roll Mill equipment of Inoue Co., Ltd. The film was laminated by hot roll-pressing at 100°C together with an aluminum current collector (Primer Coated Al Foil, Dongwon Systems) having an adhesive layer in which PVDF and carbon black were mixed.

A positive electrode manufactured by a dry process without using any solvent was manufactured to a thickness of 200 um through a multi-stage roll-pressing process, and using a lithium metal as a negative electrode, a coin half-cell was manufactured. As an electrolyte solution, LiPF₆ of 1 M, EC/EMC=3/7 (volume ratio) was used.

The coin half-cell battery was manufactured by the above-described method, and then subjected to CC/CV charge to 4.3 V at 25°C, followed by 0.05 C cut-off charge, and then was subjected to CC discharge to 3.0 V with 0.1 C to perform initial charge and discharge capacity measurement and cell verification. Thereafter, the manufactured battery was subjected to 0.05 C cut-off charge to 4.25V at 25°C with a constant current of 0.2 C. Thereafter, discharging was performed to 2.5V with a 0.2 C constant current to measure the initial charge and discharge capacity. Thereafter, charging was performed to 4.25 V with a 0.2 C constant current and a 0.05 C cut off, and then discharging was performed to 2.5 V with a 2.0 C constant current. The charging and discharging was set to 1 cycle, and 2 cycles were performed. Thereafter, for the battery, the discharge capacity at 2.0 C with respect to the 0.2 C discharge capacity was measured, and is shown in Table 3 below.

**[Table 3]**

| | 2.0 C discharge capacity ratio(%, with respect to 0.2 C discharge capacity) |
|---|---|
| Example 1 | 92.1 |
| Example 2 | 94.9 |
| Example 3 | 91.5 |
| Example 4 | 93.7 |
| Comparative Example 1 | 81.2 |
| Comparative Example 2 | 74.1 |
| Comparative Example 3 | 75.9 |

Referring to the results of Table 3 above, it can be confirmed that cells employing the positive electrode active materials of Examples 1 to 4 have excellent discharge capacity compared to cells employing the positive electrode active materials of Comparative Examples 1 to 3.

## Claims

1. A method for manufacturing a positive electrode for a lithium secondary battery, comprising steps of:
i) mixing a lithium transition metal oxide and a carbon-based material having a density of 0.05 g/cc or less in a mechanofusion manner to form a positive electrode active material including a carbon coating layer;
ii) dry mixing the positive electrode active material and a binder to form a dry mixture; and
iii) applying the dry mixture on a positive electrode current collector.

2. The method of claim 1, wherein the carbon-based material has a porous hollow structure.

3. The method of claim 1, wherein the carbon-based material has a BET specific surface area of 300 m²/g or greater.

4. The method of claim 1, wherein the carbon-based material has a primary particle diameter of 10 nm to 100 nm.

5. The method of claim 1, wherein the carbon-based material has a dibutyl phthalate absorption of 200 mL/100 g or greater.

6. The method of claim 1, wherein the carbon-based material has a graphitization (I_{D/}I_{G}) of 1.0 or greater.

7. The method of claim 1, wherein the amount of the carbon-based material is in a range of 0.1 wt% to 5 wt% based on the total weight of the lithium transition metal oxide and the carbon-based material.

8. The method of claim 1, wherein the lithium transition metal oxide is a lithium-nickel-cobalt-based composite oxide represented by Formula 1 below:
[Formula 1] Li₁₊ₓ(NiₐCo_{b}Mn_{c}M_{d})O₂
wherein in Formula 1,
M is one or more selected from the group consisting of W, Cu, Fe, V, Cr, Ti, Zr, Zn, Al, In, Ta, Y, La, Sr, Ga, Sc, Gd, Sm, Ca, Ce, Nb, Ru, Mg, P, B, Si, Na, K, and Mo, and
0≤x≤0.2, 0.50≤a≤0.95, 0≤b≤0.5, 0≤c≤0.5, 0≤d≤0.5, and a+b+c+d=1.

9. The method of claim 1, wherein the binder comprises polytetrafluoroethylene.

10. The method of claim 1, wherein the positive electrode active material has a powder electrical conductivity of 5.0 × 10⁻³ S/cm to 10.0 × 10⁻³ S/cm, which is measured after being roll-pressed with a pressure of 10 MPa to 100 MPa.

11. A positive electrode for a lithium secondary battery, comprising a positive electrode current collector and a positive electrode active material layer formed on the positive electrode current collector,
wherein the positive electrode active material layer includes a lithium transition metal oxide and a carbon coating layer formed on the lithium transition metal oxide,
wherein the carbon coating layer is formed by mixing a carbon-based material having a density of 0.05 g/cc or less with the lithium transition metal oxide in a mechanofusion manner.

12. The positive electrode of claim 11, wherein the carbon-based material has a porous hollow structure.

13. The positive electrode of claim 11, wherein the positive electrode active material layer comprises a binder, wherein the binder includes polytetrafluoroethylene.

14. The positive electrode of claim 11, wherein the positive electrode is formed by a dry process.

15. A lithium secondary battery comprising the positive electrode of claim 11.
